# EUROPÄISCHE PATENTSCHRIFT

(11) **EP 1 864 920 B1**
(45) Veröffentlichungstag und Bekanntmachung des Hinweises auf die Patenterteilung: **20.10.2010**
(21) Anmeldenummer: 07011108.3
(22) Anmeldetag: 06.06.2007
(51) Int. Cl.: B65G 17/06, B65G 21/22

(54) **Transportkette**
Conveyor chain
Chaîne de transport

(30) Priorität: 07.06.2006 DE 102006026743
(43) Veröffentlichungstag der Anmeldung: 12.12.2007
(73) Patentinhaber: Altratec Montagesysteme GmbH, 71701 Schwieberdingen (DE)
(72) Erfinder: Hauf, Hans, 71701 Schwieberdingen (DE); Nendel, Klaus, 09569 Oederan (DE); Meynerts, Peter, 09224 Grüna (DE); Kaden, Hendrik, 09116 Chemnitz (DE)
(74) Vertreter: Jeck, Anton

(56) Entgegenhaltungen:
- DE-A1- 3 914 994
- DE-A1- 4 324 120
- FR-A1- 2 629 168

## Beschreibung

Die Erfindung betrifft eine Transportkette gemäß dem Oberbegriff des Anspruchs 1.

Zum automatischen Transport von Gegenständen in Produktion, Verpackung und Logistik ist es bekannt, so genannte Transportketten zu verwenden. Transportketten bestehen aus einer Vielzahl gelenkig miteinander verbundener Kettenglieder, welche durch Transportauflagen, auf denen die zu transportierenden Gegenstände abgestellt werden können, von oben her abgedeckt sind. Die Transportauflagen können dabei einteiliger Bestandteil der Kettenglieder oder nachträglich auf die Kettenglieder aufgesetzt sein. Eine ein- oder beidseitig der Transportkette verlaufende Führungsschiene gibt die Transportbahn der Transportkette vor. Die Kettenglieder gleiten dabei in an der Führungsschiene angeordneten Führungsspalten. Zur Verringerung der Gleitreibung, beispielsweise bei Transportketten insbesondere zum Transport schwerer Güter, oder zur Verringerung der benötigten Antriebsleistung, ist bekannt, die einzelnen Kettenglieder gegenüber der Führungsschiene mittels Rollen in vertikaler Richtung abzustützen. Einen Umlauf der Transportkette entlang der Transportbahn bewirkt ein an einer oder mehreren Stellen entlang der Transportbahn auf die Transportkette einwirkender Antrieb. Ein allgemein bekanntes Beispiel einer Transportkette ist ein Gepäckband einer Gepäckausgabe auf einem Flughafen.

Grundsätzlich sind zwei Arten von Transportketten zu unterscheiden. Die eine Art weist identische Kettenglieder auf, welche an ihrem einen Ende jeweils einen Kopfteil, und an ihrem anderen Ende jeweils einen gabelartigen Abschnitt zur Aufnahme des Kopfteils des benachbarten Kettenglieds aufweisen. Die andere Art weist paarweise unterschiedliche Kettenglieder auf, so genannte Innen- und Außenglieder, entsprechend dem Grundprinzip des Aufbaus einer Fahrradkette.

Beschreibt die Transportbahn Kurven und/oder überwindet Steigungen, ist es erforderlich, die Kettenglieder untereinander um eine Hoch- und/oder Querachse schwenkbar gelenkig miteinander zu verbinden.

Aus DE 3234224 C2 ist eine Transportkette mit gelenkig miteinander verbundenen Kettengliedern bekannt. Die Transportkette kann Schleifen bilden und Höhendifferenzen überbrücken. Hierzu sind die einzelnen, gleichartig ausgebildeten Kettenglieder kardanisch miteinander verbunden, das heißt, dass für jede Bewegungsrichtung benachbarter Kettenglieder relativ zueinander ein eigenes Gelenk mit einer eigenen Achse, um die Schwenkbewegungen ausgeführt werden können, vorgesehen ist. Die Achsen der die kardanische Gelenkverbindung benachbarte Kettenglieder bildender Gelenke schneiden sich dabei in einem gemeinsamen Punkt. Dies ist sowohl im Aufbau, als auch in der Wartung wegen der Vielzahl der verwendeten Einzelteile für die verschiedenen Gelenke nachteilig. Darüber hinaus ist dies ist im Hinblick auf den knappen zur Verfügung stehenden Bauraum für die Gelenke sowohl konstruktiv als auch wartungstechnisch sehr aufwändig. Darüber hinaus ist die vom Antrieb aufzubringende Antriebskraft sehr hoch, da es bei dieser Transportkette zu hohen Gleitreibungsverlusten sowohl in vertikaler, als auch in kurvigen Abschnitten in horizontaler Richtung zwischen Führungsschiene und Kettengliedern kommt.

Aus DE 7713782 U1 ist eine Transportkette mit abwechselnd aufeinander folgend angeordneten Innen- und Außengliedern bekannt, bei der auf den Enden der in Querrichtung verlaufenden, benachbarte Kettenglieder miteinander verbindenden Verbindungsbolzen Rollen zur Abstützung vertikaler Kräfte gegenüber der Führungsschiene angeordnet sind, um die Reibungsverluste zwischen Führungsschiene und Transportkette zu verringern. Nachteilig hieran ist, dass diese Transportkette mangels gelenkiger Verbindung zwischen den einzelnen Kettengliedern nicht geeignet ist, Schleifen zu bilden. Um dies bei einer Transportkette mit abwechselnd aufeinander folgend angeordneten Innen- und Außengliedern zu ermöglichen, ist außerdem bekannt, die einzelnen Kettenglieder mit Spiel miteinander zu verbinden. Hierdurch sind jedoch nur sehr große Kurvenradien möglich und darüber hinaus ist der Verschleiß des Verbindungsbolzens aufgrund der hohen auftretenden punktförmigen Flächenpressungen in Kurven sehr hoch.

Aus EP 0618381 A1 ist eine Transmissionskette bekannt, bei der die einzelnen Kettenglieder abwechselnd um senkrecht zueinander stehende Achsen schwenkbar miteinander verbunden sind. Durchläuft die Transmissionskette beispielsweise eine horizontale Kurve, so verschwenken die Kettenglieder jeweils paarweise zueinander, was bedeutet, dass nur jedes zweite Kettenglied eine Schwenkbewegung gegenüber dem nächsten Kettenglied um die jeweilige Schwenkachse ausführen kann. Dies erfordert eine komplizierte Geometrie der Führungsschiene, da nur zwei Kettenglieder gemeinsam verschwenkt werden können und das um einander nicht schneidende Schwenkachsen. Zur Abstützung gegenüber vertikalen und horizontalen Kräften sind jeweils im Bereich der Gelenke Rollen vorgesehen, wobei je Gelenk nur eine Abstützung in einer Richtung erfolgt. Auf den einzelnen Kettengliedern sind keine Transportauflagen zum Transport von Gegenständen anordbar. Um die Transmissionskette als Transportkette zu verwenden, wird in EP 0618381 A1 deshalb vorgeschlagen, zwei Transmissionsketten parallel nebeneinander verlaufend anzuordnen und zwischen den parallel verlaufenden Transmissionsketten Transportauflagen anzuordnen. Nachteilig an einer solchen Transportkette ist der hohe Aufwand zweier parallel verlaufender Führungsschienen. Darüber hinaus sind die von einer solchen Transportkette durchlaufbaren Radien durch die mit beiden Transmissionsketten verbundenen Transportauflagen nach unten hin stark beschränkt. Zusätzlich muss die von der Transportkette beschriebene Transportbahn immer eine acht beschreiben, damit die von beiden Transmissionsketten während eines Umlaufs zurückgelegte Wegstrecke identisch ist.

Durch die DE 28 22 196 A1 ist eine kardanisch gelenkige, kurvengängige Zug- bzw. Tragförderkette bekannt, die sowohl als Zugelement als auch als Tragförderer anwendbar ist. Die Kette wird in abwechselnd angeordneten Trag- bzw. Führungsrollenpaaren über vier Laufschienen in zwei Ebenen zu der Längsachse geführt.

Ferner ist durch die DE 43 24 120 A1 eine Förderkette zum Fördern von Gegenständen, insbesondere eines mehrlagigen Massenstroms stabförmiger Artikel der tabakverarbeitenden Industrie, längs einer Förderstrecke bekannt. Die Glieder der Kette sind mittels Gelenkbolzen miteinander verbunden, die abwechselnd senkrecht zueinander verlaufen. Jeder zweite Gelenkbolzen ist als Tragbolzen ausgebildet, der zwei Laufrollen und eine Tragplatte für das Fördergut trägt. Die Laufrollen laufen bei Bewegungen der Kette an einer konvex gekrümmten Führungsschiene ab und richten die Oberfläche der Tragplatten horizontal aus. Weitere Gelenkbolzen ragen als Führungsbolzen seitlich aus den Gelenken heraus und greifen in einen Führungsschlitz ein, der in der Lauffläche der Führungsschiene verläuft.

Bei den letzten beiden Schriften liegt nur ein einachsiger Aufbau der Kettenglieder vor. Eine Führung der Kette in engen Kurven und eine hohe Belastung der Kette sind nicht möglich.

Durch die DE 39 14 994 A1 ist eine Transportkette gemäß dem Oberbegriff des Anspruchs 1 bekannt, mit mehreren, relativ zueinander jeweils mindestens um eine Hoch- und eine Querachse schwenkbar miteinander gelenkig verbundenen Kettengliedern, sowie mit den Kettengliedern verbundenen, die Kettenglieder überdeckenden Transportauflagen. Die Kettenglieder sind sowohl in vertikaler als auch in horizontaler Richtung mittels Rollen gegenüber einer Führungsschiene abgestützt. Die gelenkige Verbindung benachbarter Kettenglieder ist durch ein Gelenk hergestellt, welches aus einem an einem ersten Kettenglied angeordneten Gelenkbolzen sowie einer an einem zweiten Kettenglied angeordnete, den Gelenkbolzen konzentrisch umhüllende Gelenkhülse besteht. Um die gelenkige Verbindung zu erhalten, müssen Gelenkhülse und Gelenkbolzen ein durch einen größeren Innendurchmesser der Gelenkhülse als der Außendurchmesser des Gelenkbolzens gebildetes Spiel aufweisen.

Durch die FR 2 629 168 A1 ist eine Transportkette bekannt, mit mehreren, relativ zueinander jeweils mindestens um eine Hoch- und eine Querachse schwenkbar miteinander gelenkig verbundenen Kettengliedern, sowie mit den Kettengliedern verbundenen, die Kettenglieder überdeckenden Transportauflagen. Die Kettenglieder sind sowohl in vertikaler als auch in horizontaler Richtung mittels Rollen gegenüber einer Führungsschiene abgestützt. Die gelenkige Verbindung benachbarter Kettenglieder ist durch ein Gelenk hergestellt, welches einen an einem ersten Kettenglied angeordneten Gelenkbolzen sowie eine an einem zweiten Kettenglied angeordnete, den Gelenkbolzen konzentrisch umhüllende Gelenkhülse umfasst. Zur Herstellung der gelenkigen Verbindung weist die Gelenkhülse ein den Gelenkbolzen aufnehmendes Loch auf, dessen Durchmesser größer ist, als der des Gelenkbolzens.

Eine Aufgabe der Erfindung ist es, eine im Aufbau einfache und in der Wartung kostengünstige Transportkette zu schaffen, die in der Lage ist, beliebigen

Transportbahnen zu folgen, welche Kurven aufweisen sowie Höhendifferenzen überbrücken können, und deren Gleitreibungsverluste gegenüber der Führungsschiene gering sind.

Diese Aufgabe wird gelöst durch die Merkmale des Anspruchs 1.

Die Erfindung geht aus von einer in einer horizontalen und in einer vertikalen Ebene umlenkbaren Transportkette, deren einzelne Kettenglieder zur vollständigen Vermeidung von Gleitreibungsverlusten zwischen Transportkette und Führungsschiene sowohl in vertikaler, als auch in horizontaler Richtung mittels Rollen gegenüber einer die Transportbahn der Transportkette vorgebenden Führungsschiene abgestützt sind, wodurch einerseits eine geringere Antriebsleistung für die Transportkette benötigt, und andererseits eine hohe Lebensdauer der Transportkette erzielt wird. Die Transportauflagen können beispielsweise als Tragplatten oder sonstige Förderelemente ausgebildet sein.

Ausgehend von der genannten Transportkette ist bei einem ersten Gegenstand der Erfindung jeweils mindestens eine an mindestens jedem zweiten Kettenglied angeordnete, um eine normal zur Bewegungsrichtung der Transportkette und normal zur jeweiligen Querachse des jeweiligen Kettenglieds verlaufende Achse drehbar gelagerte Rolle vorgesehen, deren Durchmesser kleiner ist, als ein in der Führungsschiene angeordneter, die Bahn der Transportkette vorgebender Führungsspalt, und deren Durchmesser so groß bemessen ist, dass die Rolle in horizontaler Richtung mit einer Wandung des Führungsspalts in Kontakt kommt, bevor ein anderer Teil des Kettenglieds in horizontaler Richtung mit der Führungsschiene in Kontakt kommt. Durch diese Maßnahmen genügt eine einzige Rolle zur Abstützung eines Kettenglieds gegenüber der Führungsschiene bezüglich horizontaler Kräfte, unabhängig davon, ob die Transportbahn eine Rechts- oder Linkskurve beschreibt. Dabei ist unter anderem zu beachten, dass die Rolle zur Abstützung horizontaler Kräfte mit einer Wandung des Führungsspalts in Kontakt kommt, bevor die Rollen zur Abstützung gegenüber vertikalen Kräften in horizontaler Richtung mit der Führungsschiene in Kontakt kommen. Ragt ein Teil des Kettenglieds in den Führungsspalt, so ist auch zu beachten, dass der Durchmesser der Rolle größer ist, als die Breite des in den Führungsspalt ragenden Teils des Kettenglieds. Eine vorteilhafte Ausgestaltung der Erfindung sieht vor, dass die gelenkige Verbindung zweier benachbarter Kettenglieder untereinander durch jeweils genau ein Gelenk hergestellt ist, welches sowohl Schwenkbewegungen mindestens um die Hoch-, als auch um die Querachse ausführen kann. Hierdurch ist es nicht mehr wie beim Stand der Technik nötig, für jede Schwenkrichtung ein eigenes Gelenk vorzusehen. Dies verringert den Konstruktions-, Herstellungs- und Wartungsaufwand gegenüber einer aus dem Stand der Technik bekannten Transportkette erheblich. Da die Schwenkbewegungen um beide Achsen durch ein einziges Gelenk ermöglicht werden, schneiden sich die Schwenkachsen in einem gemeinsamen Punkt, wodurch darüber hinaus die Ausgestaltung der Führungsschiene besonders einfach wird.

Dabei ist denkbar, dass die Kettenglieder durch das Gelenk zusätzlich um eine Längsachse schwenkbar miteinander verbunden sind, wobei das zwei benachbarte Kettenglieder miteinander verbindende Gelenk neben den Schwenkbewegungen um die Hoch- und Querachse auch Schwenkbewegungen um die Längsachse ausführen kann. Hierdurch kann die Transportkette auch einer Transportbahn folgen, die ein Verdrehen gegenüber der Bewegungsrichtung der Transportkette vorsieht, beispielsweise um Gegenstände seitlich von der Transportkette abrutschen zu lassen, oder um enge Kurvenradien bei hoher Geschwindigkeit durchlaufen zu können, ohne dass transportierte Gegenstände oder Füllungen solcher Gegenstände, wie beispielsweise Flüssigkeiten oder Schüttgut beispielsweise in Form von Tabletten oder dergleichen, von der Transportkette abgeworfen werden oder aus den transportierten Gegenständen schwappen. Auch die dritte Schwenkachse schneidet die beiden anderen Schwenkachsen in einem gemeinsamen Punkt, da alle Schwenkbewegungen durch ein einziges Gelenk ermöglicht werden.

Gemäß einer vorteilhaften Ausgestaltung der Erfindung ist der Gelenkbolzen beidseits der Aufweitung an dem ersten Kettenglied gelagert und/oder befestigt, wobei der Abstand zwischen den beiden Lagerungen so bemessen ist, dass die Gelenkhülse in Richtung der Längsachse des Gelenkbolzens im Wesentlichen ortsfest gehalten wird und Schwenkbewegungen um senkrecht zum Gelenkbolzen verlaufende Schwenkachsen ausführen kann.

Eine andere vorteilhafte Ausgestaltung der Erfindung sieht vor, dass der Gelenkbolzen in Querrichtung zur Transportkette verläuft und beidseits der Aufweitung Verlängerungen aufweist, auf denen Rollen zur Abstützung von auf das Kettenglied einwirkenden Kräften in vertikaler Richtung gegenüber der Führungsschiene angeordnet sind. Hierdurch wird erreicht, dass das Gelenk an der Achse der Rollen zur Abstützung gegenüber vertikalen Kräften ausgebildet ist, wodurch die Anzahl der Einzelteile der erfindungsgemäßen Transportkette deutlich verkleinert, und damit die Kosten für Konstruktion, Herstellung und Wartung der erfindungsgemäßen Transportkette gegenüber dem Stand der Technik nochmals verringert werden.

Eine besonders vorteilhafte Ausgestaltung der Erfindung sieht vor, dass die Abstützung der Kettenglieder gegenüber der Führungsschiene bezüglich vertikaler Kräfte zwischen einem oberen und einem unteren Führungsspalt erfolgt, wobei an mindestens jedem zweiten Kettenglied jeweils eine in den oberen und in den unteren Führungsspalt ragende Rolle zur Abstützung gegenüber horizontalen Kräften angeordnet ist. Indem sowohl oben, als auch unten an jedem Kettenglied eine Rolle zur Abstützung gegenüber horizontalen Kräften vorgesehen ist, kann sich die Kette nicht verkanten, oder beispielsweise unter schwerer Last aus der Führungsschiene herausspringen.

Vorzugsweise umfasst die erfindungsgemäße Transportkette abwechselnd angeordnete Innen- und Außenglieder als Kettenglieder. Dabei ist denkbar, dass die Transportauflagen an den durch Innenglieder miteinander verbundenen Außengliedern angeordnet sind. Vorzugsweise sind beidseitig an den Außengliedern jeweils ein Gelenkbolzen angeordnet, wobei die Innenglieder beidseitig mit Gelenkhülsen versehen sind. Indem neben den Transportauflagen auch die die Rollen zur Abstützung vertikaler Kräfte tragenden Gelenkbolzen angeordnet sind, wird eine optimale Weiterleitung der Gewichtskräfte der zu transportierenden Güter auf die Führungsschiene unter minimaler Belastung der einzelnen Teile der Transportkette erreicht.

Gemäß einer vorteilhaften Ausgestaltung der Erfindung erfolgt der Antrieb der Transportkette über horizontal und/oder vertikal angeordnete Bogen- und/oder Umlenkräder.

Grundsätzlich ist denkbar, dass die Transportauflagen benachbarter Kettenglieder eine korrespondierende Verzahnung aufweisen, wobei die Verzahnung mit so viel Spiel bemessen ist, dass sich die Transportauflagen benachbarte Kettenglieder innerhalb der von der Transportkette zu durchlaufenden Radien, beispielsweise nach unten hin durch den Durchmesser des Gelenkbolzens, den Durchmesser der Aufweitung und die Länge der Gelenkhülse begrenzt und vorgegeben durch Steigungen und Kurven, gegenseitig nicht berühren.

Vorzugsweise sind die Transportauflagen lösbar mit den Kettengliedern verbunden, so dass die Transportauflagen in Abhängigkeit der zu transportierenden Gegenstände leicht austauschbar sind, und verschlissene Transportauflagen leicht auswechselbar sind, ohne die gesamte Transportkette zerlegen oder austauschen zu müssen.

Die Erfindung wird nachfolgend anhand von Ausführungsbeispielen näher erläutert. Es zeigen:
- Fig. 1: eine schematische, perspektivische Darstellung eines Abschnitts einer in einer Führungsschiene geführten erfindungsgemäßen Transportkette,
- Fig. 2: eine schematische, perspektivische Explosionsdarstellung des Abschnitts der Transportkette aus Fig. 1,
- Fig. 3: den Abschnitt der Transportkette aus Fig. 1 mehr von vorn mit nur 1 Rolle für die seitliche Kettenführung,
- Fig. 4: eine schematische, perspektivische Darstellung des Verlaufs einer Transportbahn einer erfindungsgemäßen Transportkette und
- Fig. 5: eine schematische, perspektivische Explosionsdarstellung zweier zweiachsiger Kettenglieder mit jeweils einer Transportauflage und zugehörigen Verbindungsgliedern.

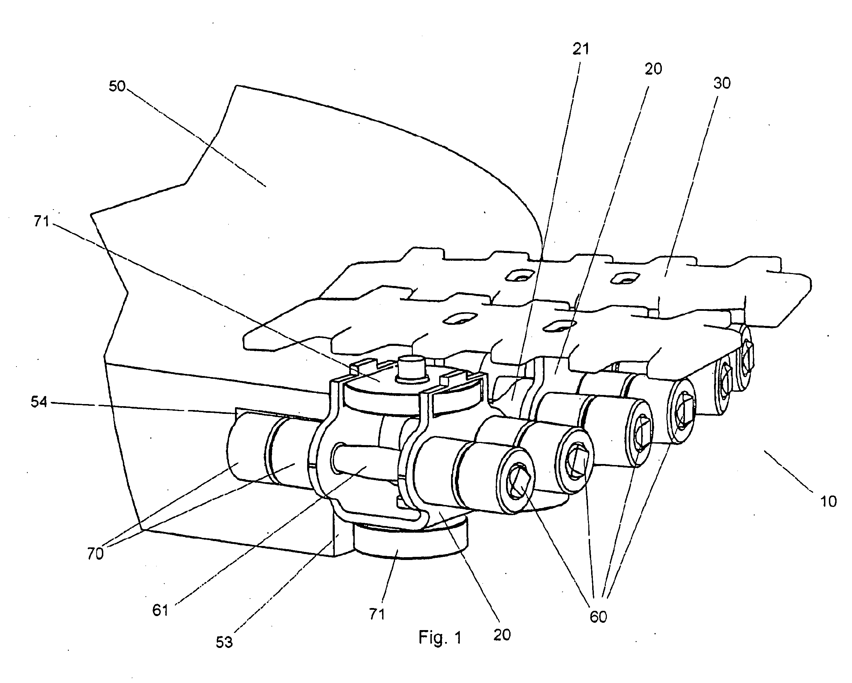

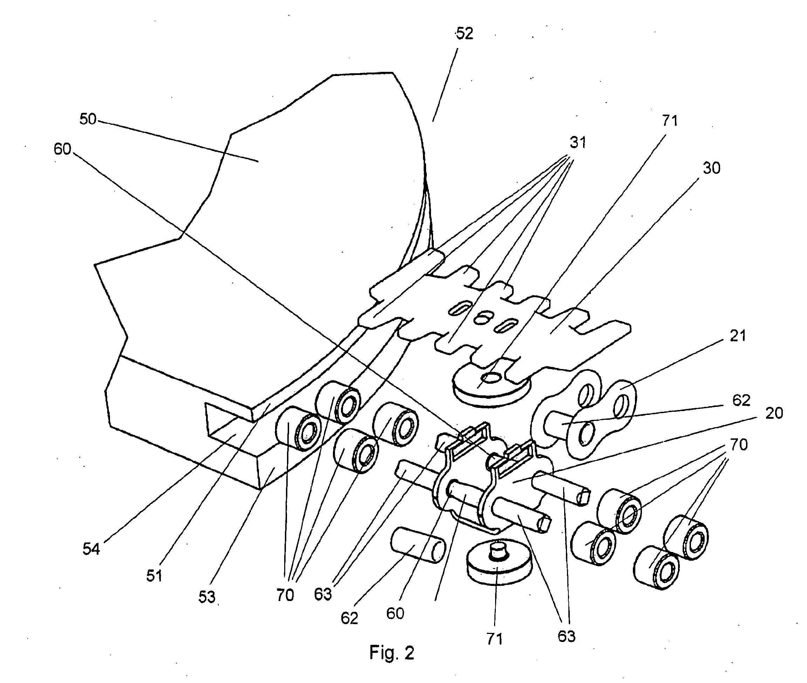

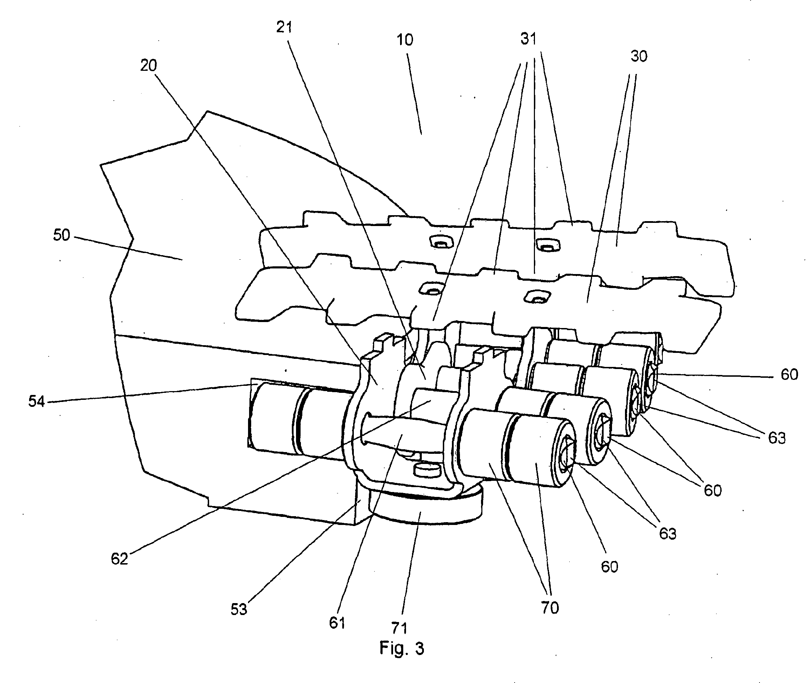

Ein in den Fig. 1 bis 3 dargestellter Abschnitt einer erfindungsgemäßen Transportkette 10 besteht aus mehreren, relativ zueinander jeweils mindestens um eine Hoch-, eine Quer- sowie eine Längsachse schwenkbar gelenkig miteinander verbundenen Kettengliedern 20, 21, sowie mit den Kettengliedern 20 verbundene, die Kettenglieder überdeckende Transportauflagen 30. Die Kettenglieder 20 sind dabei sowohl in vertikaler, als auch in horizontaler Richtung mittels Rollen 70, 71 gegenüber einer in den Fig. 1 bis 3 vereinfacht nur einseitig dargestellten Führungsschiene 50 abgestützt. In einer vollständigen Darstellung wäre erkennbar, dass die Führungsschiene 50 nicht nur aus einem in den Fig. 1 bis 3 dargestellten Teil, sondern zusätzlich aus einem in konstantem Abstand parallel zu dem dargestellten Teil verlaufenden, weiteren Teil besteht. Beide Teile gemeinsam bilden einen oberen und einen unteren, die Transportbahn der Transportkette 10 vorgebenden Führungsspalt 52 in den ein Teil der Transportkette 10 ragt. Zwischen oberem und unterem Führungsspalt 52 ist ebenfalls beidseitig der Transportkette 10 ein Stützspalt zur Abstützung der Transportkette 10 gegenüber vertikalen Kräften angeordnet. Auch in den Stützspalt 54 ragt ein Teil der Transportkette 10.

Die erfindungsgemäße Transportkette 10 besteht aus abwechselnd angeordneten Außen- 20 und Innengliedern 21 als Kettenglieder. Die Transportauflagen 30 sind an den durch die Innenglieder 21 miteinander verbundenen Außengliedern 20 angeordnet.

Die gelenkige Verbindung zweier benachbarter Kettenglieder 20, 21 ist durch jeweils genau ein Gelenk hergestellt, welches sowohl Schwenkbewegungen um die Hoch-, die Quer- und die Längsachse ausführen kann. Das Gelenk umfasst einen an einem ersten Kettenglied 20 angeordneten Gelenkbolzen 60, der eine rotationssymmetrische, tonnenförmig konvex ausgeführte Aufweitung 61 aufweist, sowie eine an einem zweiten Kettenglied 21 angeordnete, den Gelenkbolzen 60 konzentrisch umhüllende Gelenkhülse 62, die einen im Wesentlichen dem maximalen Außendurchmesser der Aufweitung 61 entsprechenden Innendurchmesser aufweist. Die Aufweitung kann auch doppelkegelförmig konisch ausgeführt sein. Grundsätzlich kann die Aufweitung jede beliebige Form aufweisen, bei der sichergestellt ist, dass die Gelenkhülse gegenüber dem Gelenkbolzen Schwenkbewegungen um alle Achsen ausführen kann und ständig in mindestens linienförmigem Kontakt mit dem Gelenkbolzen steht.

Der Gelenkbolzen 60 ist beidseits der Aufweitung 61 an dem ersten Kettenglied 20 gelagert, wobei der Abstand zwischen den beiden Lagerungen so bemessen ist, dass die Gelenkhülse 62 in Richtung der Längsachse des Gelenkbolzens 60 im Wesentlichen ortsfest gehalten wird und Schwenkbewegungen um senkrecht zum Gelenkbolzen 60 verlaufende Schwenkachsen ausführen kann.

Beidseitig an den Außengliedern 20 ist jeweils ein Gelenkbolzen 60 angeordnet, wobei die Innenglieder 21 beidseitig mit Gelenkhülsen 62 versehen sind. Die Gelenkbolzen 60 verlaufen dabei in Querrichtung zur Transportkette 10 und weisen beidseits der Aufweitung 61 Verlängerungen 63 auf, auf denen Rollen 70 zur Abstützung von auf das Kettenglied 20 einwirkenden Kräften in vertikaler Richtung gegenüber der Führungsschiene 50 angeordnet sind. Indem neben den Transportauflagen 30 auch die die Rollen 70 zur Abstützung vertikaler Kräfte tragenden Gelenkbolzen 60 angeordnet sind, wird eine optimale Weiterleitung der Gewichtskräfte der zu transportierenden Güter auf die Führungsschiene 50 unter minimaler Belastung der einzelnen Teile der Transportkette 10 erreicht.

Die Ausgestaltung der Außenglieder 20 mit jeweils zwei Rollenachsen 60 gewährleistet auch bei nicht zentrischer Belastung der Transportauflage 30 in Transportrichtung eine kippstabile Lage dieser Transportauflagen in Transportrichtung, so dass jedes Außenglied 20 in Verbindung mit den beiden Achsen 60 und den Rollen 70 einen eigenen, fahrstabilen Transportwagen darstellt, wobei die Transportwagen untereinander in Verbindung mit dem Innenglied 21 und der Gelenkhülse 61 gelenkig verbunden sind.

Zur Abstützung von auf die Transportkette 10 einwirkenden Kräften in horizontaler Richtung gegenüber der Führungsschiene 50 ist an jedem Außenglied 20 oben und/oder unten jeweils eine um eine normal zur Bewegungsrichtung der Transportkette 10 und normal zur jeweiligen Querachse des Außenglieds 20 verlaufende Achse drehbar gelagerte Rolle 71 angeordnet, deren Durchmesser kleiner ist, als ein in der Führungsschiene 50 angeordneter, die Bahn der Transportkette 10 vorgebender Führungsspalt 52, und deren Durchmesser so groß bemessen ist, dass die Rolle 71 in horizontaler Richtung mit einer Wandung 51, 53 des Führungsspalts 52 in Kontakt kommt, bevor ein anderer Teil des Kettenglieds 20, oder ein Teil eines benachbarten Kettenglieds 21 in horizontaler Richtung mit der Führungsschiene 50 in Kontakt kommt. Die Abstützung der Transportkette 10 gegenüber der Führungsschiene 50 bezüglich vertikaler Kräfte erfolgt in einem beidseitig an der Führungsschiene 50 zwischen dem oberen und dem unteren Führungsspalt 52 angeordneten Stützspalt 54.

Die an den Außengliedern 20 angeordneten Transportauflagen 30 weisen eine korrespondierende Verzahnung 31 auf, welche mit ausreichend Spiel bemessen ist, so dass sich benachbarte Transportauflagen 30 innerhalb der von der Transportkette 10 zu durchlaufenden Radien gegenseitig nicht berühren. Die Transportauflagen 30 sind dabei lösbar mit den Außengliedern 20 verbunden, um eine einfache Austausch- und Wartbarkeit zu ermöglichen.

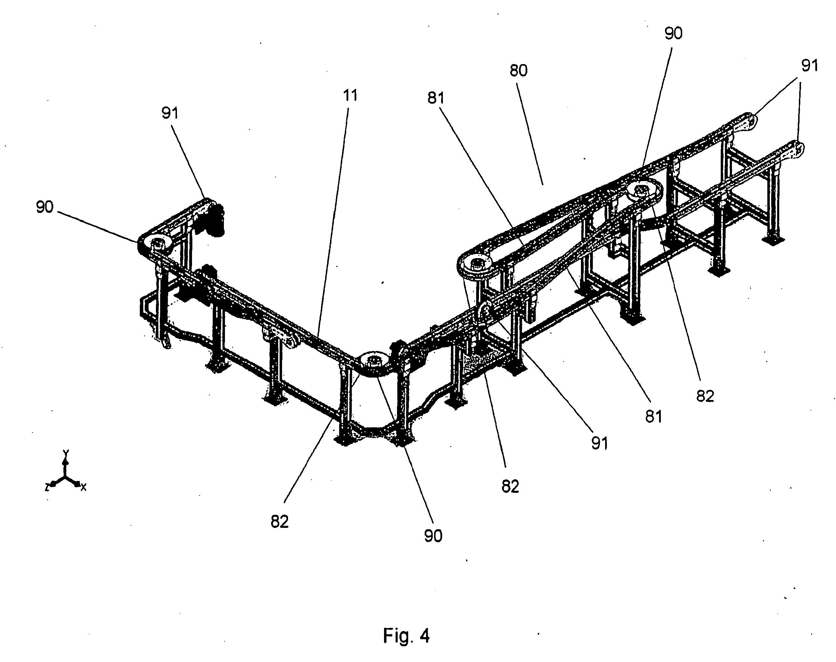

In Fig. 4 ist zu erkennen, dass die Transportbahn 80 der erfindungsgemäßen Transportkette 11 beliebig ausgebildet sein kann. Die Transportbahn 80 kann Steigungen 81 überwinden, enge Kurven 82 durchlaufen und muss nicht, wie teilweise beim Stand der Technik üblich, eine acht durchlaufen.

Der Antrieb der Transportkette 11 erfolgt über horizontal und/oder vertikal angeordnete Bogen- 90 und/oder Umlenkräder 91.

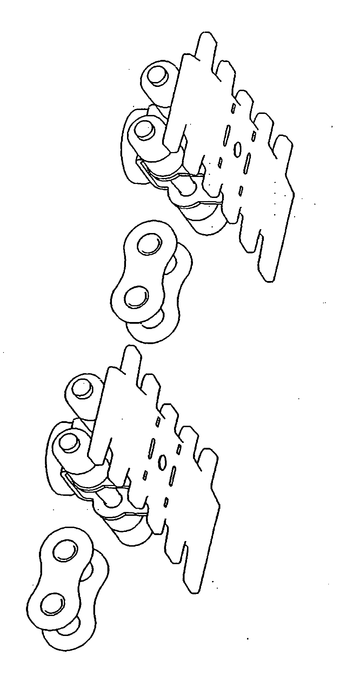

In Fig. 5 ist der zweiachsige Aufbau der Kettenglieder (Kettenwagen mit Transportauflagen und Rollen) dargestellt, die jeweils mit einer Gelenkkupplung ähnlich einer Eisenbahn verbunden sind. Es ergeben sich damit funktionsfähige, nach allen Richtungen geführte, stabile Wagen, die jeweils über ein Zugelement und zwei kardanische Gelenke verbunden sind, die hochbelastbar sind und bei denen eine Herstellung im Wesentlichen aus handelsüblichen Ketten-Norm-Einzelteilen möglich ist.

Wichtig ist hervorzuheben, dass die erfindungsgemäße Transportkette vorzugsweise aus einander abwechselnden Innen- und Außengliedern besteht. Die Transportkette kann sowohl horizontal, als auch vertikal umgelenkt werden. Bei der erfindungsgemäßen Transportkette sitzen die Innenglieder auf einer Gelenkhülse, welche sich gelenkig angeordnet auf einem an einem benachbarten Außenglied angeordneten Gelenkbolzen befindet. Durch die zweite Schwenkachse des durch Gelenkbolzen und Gelenkhülse gebildeten Gelenks wird der Verschleiß gegenüber dem Stand der Technik verringert. Dabei ist dieses Gelenk so ausgebildet, dass es sowohl horizontal, als auch vertikal verschwenkbar ist. Dies wird erreicht, indem der Gelenkbolzen eine tonnenförmig konvexe oder eine doppelkegelförmig konische Aufweitung aufweist, auf der die Gelenkhülse im Fall einer beispielsweise horizontalen Kurvenbewegung im Linienkontakt abrollt. Dies hat gegenüber einer zylinderförmigen Ausgestaltung des Gelenkbolzens, bei der die Gelenkhülse in einer Kurve nur punktförmig am Gelenkbolzen anliegt, den Vorteil einer geringeren Flächenpressung im Kurvenverlauf und damit einer erhöhten Lebensdauer. Der Kurvenradius kann durch diese Maßnahme darüber hinaus relativ klein gehalten werden. Ebenso ist denkbar, anstelle einer Aufweitung eine Verjüngung auszubilden.

Die horizontale Abstützung gegenüber der Führungsschiene erfolgt durch ein oder mehrere rollende Elemente, welche ober- und unterhalb des Außenglieds angeordnet in einen Führungsspalt der Führungsschiene ragen. Die vertikale Abtragung der Last erfolgt ebenfalls durch rollende Elemente, welche beidseitig auf Verlängerungen der Gelenkbolzen angeordnet sind.

Darüber hinaus ist das erfindungsgemäß ausgebildete Gelenk in der Lage, zusätzliche Schwenkbewegungen um die Längsachse der Transportkette auszuführen. Hierdurch wird der Verschleiß gegenüber dem Stand der Technik weiter verringert, einerseits dadurch dass sich alle Schwenkachsen in einem gemeinsamen Punkt schneiden, und andererseits dadurch, dass die Gelenkhülse immer in Linienkontakt mit der Aufweitung des Gelenkbolzens befindet.

Nachfolgend sind stichwortartig die Merkmale der erfindungsgemäßen Transportkette aufgelistet.
- Horizontal und vertikal über ein Gelenk beweglich.
- Horizontale und vertikale Abstützung gegenüber Führungsschiene über rollende Elemente; keine Gleitreibung.
- Horizontale Abstützung erfolgt über Rollenelemente.
- Vertikale Abstützung erfolgt über auf den verlängerten Gelenkbolzen angeordnete Rollenelemente.
- Transportkette besteht aus abwechseln angeordneten Innen- und Außengliedern.
- Verschiedene, austauschbare Transportauflagen sind auf den Außengliedern befestigt; dadurch variable Gestaltung der Kontaktfläche zum Transportgut.
- Antrieb der Transportkette erfolgt über horizontal und/oder vertikal angeordnete Bogen und/oder Umlenkräder.
- Zusammenführung der Funktion horizontales Gelenk, vertikales Gelenk und vertikale Krafteintragung durch ein einziges Funktionselement; dadurch geringe Anzahl an Bauteilen.
- Verringerung der benötigten Antriebsleistung durch Vermeidung von Gleitreibung durch den Einsatz von Rollenelementen beim horizontalen und vertikalen Krafteintrag.
- Direkte Lastabtragung durch an den Außengliedern angeordnete Transport auflagen und an den Außengliedern angeordnete Rollen.
- Auf zwei Achsen angeordnete Rollen je Außenglied; dadurch kein Verkippen der Kettenglieder bei nicht zentrischer der Transportauflagen in Transportrichtung und geringere Belastung des benachbarte Kettenglieder miteinander verbindenden Gelenks.
- Seitliche Abstützung durch eine oder mehrere Rollen in Kurven.
- Verschiedene, vorzugsweise aufsteckbare Transportauflagen zum Transport von Gegenständen oder zur Gutaufnahme.
- Durch Zwischenelemente gelenkig miteinander verbundene Kettenglieder.
- Gelenk ist an den Achsen ausgebildet und horizontal wie auch vertikal beweglich.
- Spezielle Ausgestaltung des Gelenks erlaubt darüber hinaus ohne zusätzlichen konstruktiven Aufwand Schwenkbewegung um Längsachse; dadurch weiter verringerter Verschleiß und Möglichkeit, Transportkette beispielsweise seitlich geneigt durch Kurven zu führen, Gegenstände abzuwerfen oder Güter auszuschütten.

### Bezugszahlenliste

- 10,11: Transportkette
- 20: Außenglied
- 21: Innenglied
- 30: Transportauflage
- 31: Verzahnung
- 50: Führungsschiene
- 51: Wandung
- 52: Führungsspalt
- 53: Wandung
- 54: Stützspalt
- 60: Gelenkbolzen
- 61: Aufweitung
- 62: Gelenkhülse
- 63: Verlängerung
- 70: Rolle
- 71: Rolle
- 80: Transportbahn
- 81: Steigung
- 82: Kurve
- 90: Bogenrad
- 91: Umlenkrad

## Patentansprüche

1. Transportkette (10, 11) mit mehreren, relativ zueinander jeweils mindestens um eine Hoch- und eine Querachse schwenkbar miteinander gelenkig verbundenen Kettengliedern (20, 21) sowie mit den Kettengliedern (20, 21) verbundenen, die Kettenglieder (20, 21) überdeckenden Transportauflagen (30), wobei die Kettenglieder (20, 21) sowohl in vertikaler als auch in horizontaler Richtung mittels Rollen (70, 71) gegenüber einer Führungsschiene (50) abgestützt sind, **gekennzeichnet durch**
jeweils mindestens eine an mindestens jedem zweiten Kettenglied (20, 21) angeordnete, um eine normal zur Bewegungsrichtung der Transportkette (10, 11) und normal zur jeweiligen Querachse des Kettenglieds (20, 21) verlaufende Achse drehbar gelagerte Rolle (71), deren Durchmesser kleiner ist, als ein in der Führungsschiene (50) angeordneter, die Bahn (80) der Transportkette (10) vorgebender Führungsspalt (52), und deren Durchmesser so groß bemessen ist, dass die Rolle (71) in horizontaler Richtung mit einer Wandung (51, 53) des Führungsspalts (52) in Kontakt kommt, bevor ein anderer Teil des Kettenglieds (20, 21) in horizontaler Richtung mit der Führungsschiene (50) in Kontakt kommt.

2. Transportkette nach Anspruch 1,
**dadurch gekennzeichnet,**
**dass** das Gelenk einen an einem ersten Kettenglied (20) angeordneten Gelenkbolzen (60) umfasst, der eine rotationssymmetrische, konvex oder konisch ausgeführte Aufweitung (61) aufweist, sowie eine an einem zweiten Kettenglied (21) angeordnete, den Gelenkbolzen (60) konzentrisch umhüllende Gelenkhülse (62) umfasst, die einen im Wesentlichen dem maximalen Außendurchmesser der Aufweitung (61) entsprechenden Innendurchmesser aufweist.

3. Transportkette nach Anspruch 1,
**dadurch gekennzeichnet,**
**dass** die Abstützung der Kettenglieder (20, 21) gegenüber der Führungsschiene (50) bezüglich vertikaler Kräfte zwischen einem oberen und einem unteren Führungsspalt (52) erfolgt, wobei an mindestens jedem zweiten Kettenglied (20, 21) jeweils eine (Fig. 3) oder 2 (Fig. 4) in den oberen und in den unteren Führungsspalt (52) ragende Rolle (71) zur Abstützung gegenüber horizontalen Kräften angeordnet ist.

4. Transportkette nach Anspruch 2,
**dadurch gekennzeichnet,**
**dass** der Gelenkbolzen (60) beidseits der Aufweitung (61) an dem ersten Kettenglied (20) gelagert und/oder befestigt ist, wobei der Abstand zwischen den beiden Lagerungen so bemessen ist, dass die Gelenkhülse (62) in Richtung der Längsachse des Gelenkbolzens (60) im Wesentlichen ortsfest gehalten wird und Schwenkbewegungen um senkrecht zum Gelenkbolzen (60) verlaufende Schwenkachsen ausführen kann.

5. Transportkette nach Anspruch 2 oder 3,
**dadurch gekennzeichnet,**
**dass** der Gelenkbolzen (60) in Querrichtung zur Transportkette (10, 11) verläuft und beidseits der Aufweitung (61) Verlängerungen (63) aufweist, auf denen Rollen (70) zur Abstützung von auf das Kettenglied (20) einwirkenden Kräften in vertikaler Richtung gegenüber der Führungsschiene (50) angeordnet sind.

6. Transportkette nach einem der vorhergehenden Ansprüche,
**dadurch gekennzeichnet,**
**dass** das mit der Transportauflage (30) verbundene Außenglied (20) zwei Gelenkbolzen (60) in Verbindung mit den Rollen (70) aufweist.

7. Transportkette nach einem der vorhergehenden Ansprüche,
**dadurch gekennzeichnet,**
**dass** die gelenkige Verbindung benachbarter Kettenglieder (20, 21) durch jeweils genau ein Gelenk hergestellt ist, welches sowohl Schwenkbewegungen mindestens um die Hoch-, als auch um die Querachse ausführen kann.

8. Transportkette nach einem der vorhergehenden Ansprüche,
**dadurch gekennzeichnet,**
**dass** die Kettenglieder (20, 21) durch das Gelenk zusätzlich um eine Längsachse schwenkbar miteinander verbunden sind.

9. Transportkette nach einem der vorhergehenden Ansprüche,
**gekennzeichnet durch**
abwechselnd angeordnete Innen- (21) und Außenglieder (20) als Kettenglieder.

10. Transportkette nach Anspruch 9,
**dadurch gekennzeichnet,**
**dass** die Transportauflagen (30) an den durch Innenglieder (21) miteinander verbundenen Außengliedern (20) angeordnet sind.

11. Transportkette nach einem der vorhergehenden Ansprüche,
**dadurch gekennzeichnet,**
**dass** der Antrieb der Transportkette (10, 11) über horizontal und/oder vertikal angeordnete Bogen- (90) und/oder Umlenkräder (91) erfolgt.

12. Transportkette nach einem der vorhergehenden Ansprüche,
**dadurch gekennzeichnet,**
**dass** die Transportauflagen (30) benachbarter Kettenglieder (20, 21) eine korrespondierende Verzahnung (31) aufweisen, wobei die Verzahnung (31) mit so viel Spiel bemessen ist, dass sich die Transportauflagen (30) benachbarte Kettenglieder (20, 21) innerhalb der von der Transportkette (10, 11) zu durchlaufenden Radien (81, 82) gegenseitig nicht berühren.

13. Transportkette nach einem der vorhergehenden Ansprüche,
**dadurch gekennzeichnet,**
**dass** die Transportauflagen (30) lösbar mit den Kettengliedern (20, 21) verbunden sind.

14. Transportkette nach einem der vorhergehenden Ansprüche,
**dadurch gekennzeichnet,**
**dass** auf den Gelenkbolzen (60) einseitig eine oder mehrere Rollen (70) angeordnet sind.

## Claims

1. A conveyor chain (10, 11), having a plurality of chain links (20, 21), connected to one another in articulated fashion and each pivotable relative to one another about at least one vertical axis and one horizontal axis, and having conveyor supports (30), connected to the chain links (20, 21) and covering the chain links (20, 21), the chain links (20, 21) being braced in both the vertical and the horizontal direction by means of rollers (70, 71) relative to a guide rail (50),
**characterized by**
at least one roller (71) each, disposed on at least every second chain link (20, 21) and rotatable about an axis extending perpendicularly to the direction of motion of the conveyor chain (10, 11) and perpendicularly to the respective horizontal axis of the chain link (20, 21), the diameter of which roller is smaller than a guide gap (52), disposed in the guide rail (50) and predetermining the path (80) of the conveyor chain (10), and whose diameter is dimensioned as so great that the roller (71) comes into contact in the horizontal direction with a wall (51, 53) of the guide gap (52), before another part of the chain link (20, 21) comes into contact in the horizontal direction with the guide rail (50).

2. The conveyor chain as defined by claim 1,
**characterized in that**
the joint includes a joint bolt (60), disposed on a first chain link (20), which bolt has a rotationally symmetrical widened portion (61), embodied as convex or conical, and includes one joint sleeve (62), concentrically sheathing the joint bolt (60) and disposed on a second chain link (21), which sleeve has an inside diameter corresponding essentially to the maximum outside diameter of the widened portion (61).

3. The conveyor chain as defined by claim 1,
**characterized in that**
the bracing of the chain links (20, 21) relative to the guide rail (50) with respect to vertical forces is effected between one upper and one lower guide gap (52), and one roller (71) (in Fig. 3) or two rollers (71) (in Fig. 4) protruding into the upper and lower guide gaps (52) are provided on at least every second chain link (20, 21), for bracing against horizontal forces.

4. The conveyor chain as defined by claim 2,
**characterized in that**
the joint bolt (60) is supported and/or secured on both sides of the widened portion (61) on the first chain link (20), and the spacing between the two supporting means is dimensioned such that the joint sleeve (62) is kept essentially stationary in the direction of the longitudinal axis of the joint bolt (60) and can execute pivoting motions about pivot axes extending perpendicular to the joint bolt (60).

5. The conveyor chain as defined by claim 2 or 3,
**characterized in that**
the joint bolt (60) extends in the transverse direction to the conveyor chain (10, 11) and, both sides of the widened portion (61), has extensions (63) on which rollers (70) for bracing of forces, acting on the chain link (20), in the vertical direction relative to the guide rail (50) are disposed.

6. The conveyor chain as defined by one of the foregoing claims,
**characterized in that**
the outer link (20), connected to the conveyor support (30), has two joint bolts (60) connected to the rollers (70).

7. The conveyor chain as defined by one of the foregoing claims,
**characterized in that**
the articulated connection of adjacent chain links (20, 21) is produced by precisely one joint each, which can execute pivoting motions at least about the vertical axis as well as about the horizontal axis.

8. The conveyor chain as defined by one of the foregoing claims,
**characterized in that**
the chain links (20, 21) are additionally connected to one another pivotably about a longitudinal axis by the joint.

9. The conveyor chain as defined by one of the foregoing claims,
**characterized by**
inner links (21) and outer links (20), disposed in alternation, as chain links.

10. The conveyor chain as defined by claim 9,
**characterized in that**
the conveyor supports (30) are disposed on the outer links (20) that are connected to one another by inner links (21).

11. The conveyor chain as defined by one of the foregoing claims,
**characterized in that**
the drive of the conveyor chain (10, 11) is effected via horizontally and/or vertically disposed curved wheels (90) and/or deflection wheels (91).

12. The conveyor chain as defined by one of the foregoing claims,
**characterized in that**
the conveyor supports (30) of adjacent chain links (20, 21) have a corresponding toothing (31), and the toothing (31) is dimensioned with so much play that the conveyor supports (30) of adjacent chain links (20, 21) do not touch one another within the radii (81, 82) to be traversed by the conveyor chain (10, 11).

13. The conveyor chain as defined by one of the foregoing claims,
**characterized in that**
the conveyor supports (30) are detachably connected to the chain links (20, 21).

14. The conveyor chain as defined by one of the foregoing claims,
**characterized in that**
one or more rollers (70) are disposed on one side of the joint bolts (60).

## Revendications

1. Chaîne de transport (10, 11) comprenant plusieurs chaînons (20, 21) reliés les uns aux autres de manière articulée avec faculté de pivotement mutuel respectif, au moins autour d'un axe vertical et d'un axe transversal, ainsi que des platines de transport (30) reliées aux chaînons (20, 21) et recouvrant lesdits chaînons (20, 21), sachant que lesdits chaînons (20, 21) sont en appui par rapport à un rail de guidage (50) au moyen de rouleaux (70, 71), dans les directions tant verticale qu'horizontale,
**caractérisée par**
au moins un rouleau respectif (71) qui est disposé à raison d'au moins un chaînon (20, 21) sur deux ; est monté à rotation autour d'un axe s'étendant perpendiculairement à la direction de mouvement de la chaîne de transport (10, 11) et perpendiculairement à l'axe transversal respectif dudit chaînon (20, 21) ; dont le diamètre est plus petit qu'un interstice de guidage (52) ménagé dans le rail de guidage (50) et préétablissant la trajectoire (80) de ladite chaîne de transport (10) ; et dont le diamètre offre un dimensionnement tel que ledit rouleau (71) entre en contact avec une paroi (51, 53) dudit interstice de guidage (52), dans la direction horizontale, avant qu'une autre partie dudit chaînon (20, 21) n'entre en contact avec ledit rail de guidage (50) dans ladite direction horizontale.

2. Chaîne de transport selon la revendication 1,
**caractérisée par le fait**
**que** l'articulation comprend une cheville d'articulation (60) disposée sur un premier chaînon (20) et dotée d'un évasement (61) à symétrie de révolution, de réalisation convexe ou tronconique, ainsi qu'une douille d'articulation (62) qui est disposée sur un second chaînon (21), entoure concentriquement ladite cheville d'articulation (60) et est pourvue d'un diamètre intérieur correspondant, pour l'essentiel, au diamètre extérieur maximal dudit évasement (61).

3. Chaîne de transport selon la revendication 1,
**caractérisée par le fait**
**que** l'appui des chaînons (20, 21) par rapport au rail de guidage (50) s'instaure entre des interstices de guidage (52) supérieur et inférieur, vis-à-vis de forces verticales, sachant qu'un rouleau (figure 3) ou deux rouleaux (71) (figure 4), s'engageant respectivement dans lesdits interstices de guidage (52) supérieur et inférieur, est/sont disposé(s) à raison d'au moins un chaînon (20, 21) sur deux en vue d'assurer l'appui vis-à-vis de forces horizontales.

4. Chaîne de transport selon la revendication 2,
**caractérisée par le fait**
**que** la cheville d'articulation (60) est montée et/ou fixée sur le premier chaînon (20) de part et d'autre de l'évasement (61), la distance, entre les deux zones de montage, étant dimensionnée de telle sorte que la douille d'articulation (62) soit maintenue pour l'essentiel stationnaire, dans la direction de l'axe longitudinal de ladite cheville d'articulation (60), et puisse accomplir des mouvements pivotants autour d'axes de pivotement s'étendant perpendiculairement à ladite cheville d'articulation (60).

5. Chaîne de transport selon la revendication 2 ou 3,
**caractérisée par le fait**
**que** la cheville d'articulation (60) s'étend dans la direction transversale par rapport à ladite chaîne de transport (10, 11) et présente, de part et d'autre de l'évasement (61), des prolongements (63) sur lesquels des rouleaux (70) sont disposés pour offrir un appui à des forces agissant sur le chaînon (20), dans la direction verticale, vis-à-vis du rail de guidage (50).

6. Chaîne de transport selon l'une des revendications précédentes,
**caractérisée par le fait**
**que** le chaînon (20) extérieur, relié à la platine de transport (30), comporte deux chevilles d'articulation (60) en association avec les rouleaux (70).

7. Chaîne de transport selon l'une des revendications précédentes,
**caractérisée par le fait**
**que** la liaison articulée entre des chaînons voisins (20, 21) est précisément établie, à chaque fois, par exactement une articulation pouvant accomplir des mouvements pivotants tant au moins autour de l'axe vertical, qu'autour de l'axe transversal.

8. Chaîne de transport selon l'une des revendications précédentes,
**caractérisée par le fait**
**que** les chaînons (20, 21) sont reliés les uns aux autres, par l'intermédiaire de l'articulation, avec faculté additionnelle de pivotement autour d'un axe longitudinal.

9. Chaîne de transport selon l'une des revendications précédentes,
**caractérisée par**
des chaînons intérieurs (21) et extérieurs (20), agencés alternativement en tant que chaînons de ladite chaîne.

10. Chaîne de transport selon la revendication 9,
**caractérisée par le fait**
**que** les platines de transport (30) sont disposées sur les chaînons (20) extérieurs, reliés les uns aux autres par des chaînons (21) intérieurs.

11. Chaîne de transport selon l'une des revendications précédentes,
**caractérisée par le fait**
**que** l'entraînement de ladite chaîne de transport (10, 11) s'opère au moyen de roues (90) à secteurs et/ou de roues de renvoi (91), disposées horizontalement et/ou verticalement.

12. Chaîne de transport selon l'une des revendications précédentes,
**caractérisée par le fait**
**que** les platines de transport (30) de chaînons voisins (20, 21) offrent une denture (31) concordante, le dimensionnement de ladite denture (31) présentant suffisamment de jeu, que les platines de transport (30) de chaînons voisins (20, 21) ne soient pas en contact réciproque à l'intérieur des sinuosités ou rayons (81, 82) devant être parcourues par ladite chaîne de transport (10, 11).

13. Chaîne de transport selon l'une des revendications précédentes,
**caractérisée par le fait**
**que** les platines de transport (30) sont reliées aux chaînons (20, 21) de façon amovible.

14. Chaîne de transport selon l'une des revendications précédentes,
**caractérisée par le fait**
**qu'**un ou plusieurs rouleau(x) (70) est/sont disposé(s) d'un côté des chevilles d'articulation (60).
